# EUROPEAN PATENT SPECIFICATION

(11) **EP 2 891 012 B1**
(45) Date of publication and mention of the grant of the patent: **03.04.2019**
(21) Application number: 13759565.8
(22) Date of filing: 30.08.2013
(51) Int. Cl.: G03B 15/06, F21V 1/06, F21V 7/18, G03B 17/56

(54) **PHOTOGRAPHIC LIGHT DIFFUSION BOX AND APPARATUS FOR MOUNTING THE BOX TO VARIOUS LIGHT SOURCES.**
FOTOGRAFISCHER LICHTSTREUUNGSKASTEN UND VORRICHTUNG ZUR MONTAGE DES KASTENS AN VERSCHIEDENEN LICHTQUELLEN
BOÎTE DE DIFFUSION DE LUMIÈRE PHOTOGRAPHIQUE ET APPAREIL POUR MONTAGE DE LA BOÎTE À DIFFÉRENTES SOURCES LUMINEUSES

(30) Priority: 31.08.2012 GB 201215572
(43) Date of publication of application: 08.07.2015
(73) Proprietor: Vitec Imaging Solutions UK Limited, Richmond Surrey TW9 1EN (GB)
(72) Inventor: CALVERT, Jack Edmund, Richmond Surrey TW9 1EN (GB); ASTILL, Gary James, Richmond Surrey TW9 1EN (GB)
(74) Representative: Susanetto, Carlo
(86) International application number: PCT/GB2013/052285
(87) International publication number: WO 2014/033470

(56) References cited:
- WO-A1-2008/141566
- WO-A1-2010/032042
- WO-A1-2012/035311
- CH-A5- 645 735
- DE-U1-202006 013 408
- GB-A- 2 425 589
- GB-A- 2 442 018
- US-A- 4 210 952
- US-A- 4 807 089
- US-A1- 2010 128 473

## Description

This invention relates to lighting apparatus for use in photography, and in particular to a light diffusion box of the type commonly known as a "softbox".

Light diffusion boxes or softboxes are commonly used in photography to modify the light used to illuminate the photographic subject. Such a softbox typically comprises a generally pyramidal, tensioned fabric enclosure that is mounted on a lamp. The sides of the enclosure are usually opaque, while the base is translucent, typically being covered by a fabric sheet through which light from the lamp passes. The effect of the fabric sheet is to "soften" the light falling on the subject.

Softboxes of the type described are most commonly used in location shooting. However, because they are relatively bulky items (the base of the enclosure commonly being up to 1 metre square), they are usually transported in a collapsed condition and are erected immediately prior to use. To achieve this, the softbox normally comprises a framework over which the fabric enclosure is stretched. Unfortunately, conventional designs of softbox are rather cumbersome and difficult to erect. In addition, although the framework can be disassembled for storage and transport, the length of some of the components may be quite considerable (eg 1 metre or more) which makes it inconvenient for them to be carried by a photographer travelling on foot. The time taken for the softbox to be erected and disassembled repeatedly, as may be required by, for example, a television news team working on location, may also be excessive.

An improved design of softbox is disclosed in WO 03/071351, which comprises three or more panels connected at major edges thereof so as to form a generally pyramidal enclosure adapted at the apex thereof to be mounted on a photographic lamp. The base of the pyramidal enclosure is adapted to receive a light-modifying screen, and in particular a diffusion screen. Furthermore, each panel comprises a sheet of flexible material that is supported in tension by a flexible resilient hoop.

This arrangement is advantageous primarily in that the enclosure can be very rapidly and easily collapsed and re-erected. In order to collapse the enclosure, it is removed from the lamp and folded so that the panels overlie one another. By relative twisting of opposite sides of the panels and folding, the enclosure can be reduced to a much smaller effective size and stowed in a compartment or bag provided for the purpose. By way of example, an enclosure having a base approximately 1 metre square may be reduced in size to a package approximately 30cm in diameter.

Although this design of softbox offers considerable advantages over the prior art, it is believed that the cost of manufacture can be reduced. In particular, it is typical to use a strip of metal to form the flexible resilient hoop of each panel, and each of these hoops typically needs to be sewn into position at the periphery of each panel.

Further lighting apparatus are known from WO20100032042A and GB2442018A.

There has now been devised a photographic lighting apparatus, as defined in independent claim 1, which overcomes or substantially mitigates the above-mentioned and/or other disadvantages associated with the prior art.

According to a first aspect of the invention there is defined a photographic lighting apparatus comprising a plurality of panels, each panel being separated from adjacent panels on each side by flexible webs, such that the panels and webs define a wall of an enclosure, and a removable strut associated with each web for maintaining the panels in mutually fixed relation, the enclosure having an opening at a proximal end adapted to be mounted to a light source with proximal edges of at least some of the panels being weight-bearing members for the apparatus, and a distal end of the enclosure being adapted to transmit light therefrom.

This apparatus is advantageous principally because it is rapidly and easily collapsible, with reduced manufacturing costs relative to other arrangements utilising a plurality of panels. In particular, the apparatus according to the invention may be collapsed by removing the rigid struts and, in some embodiments, folding in a similar manner to the apparatus described in WO 03/071351. In addition, however, the use of webs for connecting the panels, and the use of struts for maintaining the panels in mutually fixed relation, reduces the number of panels required to define an enclosure relative to the apparatus of WO 03/071351. A reduction in the number of panels required reduces manufacturing costs in view of flexible webs being cheaper and less complicated to manufacture than panels. The presence of the webs also enables further functionality, such as the adjustment of the size of the light-transmitting, distal end of the apparatus, as described in more detail below.

The panels and webs preferably define a wall that extends from the opening adapted to be mounted to a light source at the proximal end of the apparatus, to the distal end of the apparatus adapted to transmit light therefrom. The distal end of the apparatus may comprise an opening, but preferably comprises, or is adapted to receive, a light-modifying screen through which light is transmitted. The light-modifying screen will typically be a diffusion screen. The panels of the apparatus are preferably opaque, and typically have a reflective inner surface. The webs also typically have a reflective inner surface.

In a preferred embodiment, the apparatus comprises means for reconfiguring the enclosure, to bring the enclosure from an expanded configuration to a contracted configuration, such that the distal end of the apparatus is reduced in size. This is preferably achieved by the surface of one or more of the webs, on the inside of the enclosure, being reduced in size in the contracted configuration relative to the expanded configuration.

The means for reconfiguring the enclosure may be located on the inner surface of the enclosure. Preferably, the means for reconfiguring the enclosure extends from a proximal region to a distal region of the inner surface of a web. Preferably, the means for reconfiguring the enclosure comprises a fastener having two elongate strips which are connectable together. When the enclosure is in the expanded configuration, the fastener is open and the strips typically define a V-shape. Typically, the V-shape is symmetrical with respect to the mid-plane of the inner surface of the web. The open end of the V-shape may be located in a distal region of the inner surface of the web, and the closed end of the V-shape may be located in the proximity of a proximal edge of the web. Closing the fastener preferably causes the strips to become generally parallel. This preferably causes a region of the inner surface of the web to be withdrawn from the inner surface of the enclosure. The means for reconfiguring the enclosure is preferably a zip fastener. The enclosure preferably has a distal end through which light is transmitted from the enclosure. The distal end may be generally rectangular with at least one dimension in the expanded configuration being greater than the corresponding dimension in the contracted configuration. For example, the base may be generally square-shaped in the expanded configuration and may be generally oblong-shaped in the contracted configuration. In this way, the characteristics of the illumination provided by the apparatus may be altered by opening and closing the fastener. This affords the user greater flexibility in relation to illumination characteristics.

The panels may comprise a flexible sheet portion which is typically made of fabric. The panels have a greater rigidity than the webs. The panels may be adapted to inherently retain their shape. A frame may be located at, and may extend along, the periphery of the sheet. The frame may be resilient. The panels may be adapted to retain their shape without any further support. The frame may comprise a rigid elongate member which may be housed in a fabric tube. The frame and flexible sheet portion are preferably fixed together. The frame and flexible sheet portion are preferably permanently fixed together. The frame and flexible sheet member may be fixed together by sewing, gluing, stapling, or any other like method. Each panel may be provided with a single frame member. Each frame member may be formed into a loop, such that the ends of the frame member are joined together.

Most preferably, the fabric of each panel is provided with a peripheral tube within which a resilient hoop is accommodated, the hoop serving to tension the fabric of the panel in a shape that is determined by the shape of the fabric. The resilient hoop is most preferably formed of a band of resilient material, eg a flat strip of resilient material. The band is most preferably formed in a metal such as steel. The band preferably has a width of between 5mm and 15mm, and where the band is formed in metal, preferably has a thickness of between 0.5 and 2mm. The peripheral tube may be connected to the sheet by sewing.

The panel may be generally triangular or trapezoidal in shape, with parallel proximal and distal edges of differing lengths, and side edges that may be of substantially equal lengths. In some embodiments, the enclosure is adapted such that light is caused to leave the enclosure in a generally different direction to the direction in which the light enters the enclosure. This may be achieved by the distal end of the enclosure being inclined relative to the proximal end of the enclosure. The enclosure may have one or more asymmetric panels in order to achieve this. Asymmetric panels are panels having side edges of differing lengths, such that the distal edge of the panel lies at an oblique angle relative to the proximal edge of the panel. In these embodiments, the asymmetric panels may generally oppose each other such that a longer side edge of a first panel is located generally opposite the longer side edge of its opposing panel, and the shorter side edge of the first panel is located generally opposite the shorter side edge of its opposing panel.

The proximal edge of the panel may be defined by a proximal portion of the frame member. The proximal edge of the panel may be defined by a proximal portion of a single, hooped frame member. The proximal edge of the panel is preferably shorter than the distal edge. The side edges may subtend equal but opposite angles of inclination relative to the parallel edges of the panel. The distal edge is typically outwardly curved in the plane of the panel. The proximal edge is preferably generally straight, and preferably has angular transitions to the adjacent, inclined side edges. This arrangement is advantageous as it results in a stiffer proximal region of the apparatus, which facilitates mounting of the apparatus to a light source. The side edges are typically slightly outwardly curved in the plane of the panel. The two distal corners of the panel may be rounded in form. Each of the panels may be substantially identical in terms of shape and construction.

Each of the panels may comprise formations adapted to releasably connect to removable struts. The formations may be recesses, projections, loops of material, hooks, or the like. Each formation may be adapted to connect to one end of a removable strut. For example, the formation may be a recess for receiving an end of a removable strut.

The inner surface of the enclosure may comprise light reflective material, and is preferably substantially covered in light reflective material.

The webs each connect an inclined side edge of one panel with an inclined side edge of the other panel. The webs may connect to the panels by sewing. Each web may be connected to a panel along substantially the full length of the inclined side edge of the panel. A distal edge of each web may have a similar width to the distal edges of the panels.

Each of the struts may be elongate in form. Each of the struts may be straight or linear in form. Each of the struts may have a substantially constant cross-section along its entire length. Each of the struts may take the form of a rod. The struts may have ends that are adapted to releasably connect to the panels. The ends of the struts may be adapted to releasably connect to corresponding formations on the panels. The ends of the struts may be adapted to be received in recesses located on the panels.

Each of the struts may extend from one panel to another panel. There is preferably at least one strut for each web of the apparatus. The struts may connect to a panel at a location in close proximity to a side edge of the panel. Preferably, the strut connects to a panel at a location in close proximity to a distal edge of the panel. The strut may be located outside the enclosure. There are preferably at least two struts, where the apparatus comprises two panels, which may be located on opposite sides of each panel.

Each of the struts is removable, such that the apparatus may be collapsed or deformed. The struts may be detachable from both the panels and the remainder of the apparatus. Each of the struts may be a separate component from the panels and the remainder of the apparatus. The struts may be adapted to maintain the integrity of the apparatus. The struts may be adapted to maintain the shape of the apparatus. The struts may be detachable from the panels and the remainder of the apparatus at both ends.

The opening adapted to be mounted to a light source may be defined by proximal edges of the panels and webs. The opening may be generally rectangular, and preferably square-shaped. In the expanded configuration, the enclosure is generally pyramidal in shape.

In one preferred embodiment, the apparatus comprises two panels, with two connecting webs. This configuration provides readily collapsible apparatus with the minimum number of panels. Where the apparatus includes means for reconfiguring the enclosure, to bring the enclosure from an expanded configuration to a contracted configuration, this embodiment may have a contracted configuration in which the distal end of the apparatus has a reduced width. In this embodiment, the length of the distal edge of each panel may be substantially greater than the length of the panel.

In a further preferred embodiment, the photographic diffusion apparatus may comprise four panels connected together by webs. This arrangement is advantageous as it provides for different illumination characteristics than the prior art, four-panelled arrangement. In this embodiment, the side edges of the panels may be substantially outwardly curved in the plane of the panel, and the lengths of the side edges of the panels may be similar to, or greater than, the length of the distal edges of the panels.

The lengths of the distal edges of the webs may be similar to those of the distal edges of the panels. The lengths of the proximal edges of the webs may be shorter than, and preferably significantly shorter than, those of the proximal edges of the panels.

Where four panels are provided, the proximal opening may be octagonal in cross-section. Furthermore, the distal end of the enclosure may be octagonal in cross-section. The ends of the struts may be received within pockets located on the outer surface of the panels. A diffusion screen is preferably present at the distal end of the enclosure.

The enclosure is most preferably mounted, in use, to an adapter hub for mounting the apparatus to a light source. The adaptor hub is preferably annular in form, and preferably has peripheral formations by which the enclosure may be engaged with the hub. Most preferably, such formations take the form of recesses within which the proximal edges of the panels engage, the enclosure being maintained in engagement with the hub by the resilience of the panels or by fasteners on the hub.

According to a further aspect of the invention, there is provided a mounting bracket adapted to mount a photographic light-modifying apparatus to a light source, the mounting bracket comprising an annular hub adapted to be mounted within an opening in a photographic diffusion apparatus, and an axially extending support arm, the annular hub having a mounting element for mounting the hub to an annular adaptor of a self-supporting lighting source, and the axially extending support arm having a mounting element for supporting a portable lighting source.

This arrangement is advantageous principally in that it enables a user to mount a photographic light-modifying apparatus to both self-supporting light sources, such as studio flashes, and portable light sources, such as speedflash lighting devices, without the need to use different mounting brackets.

The mounting element of the annular hub may include one or more retaining members, which may project from a surface of the annular hub, and preferably define a receiving channel between the retaining member and the surface if the annular hub. The retaining member(s) may be adapted to receive at least part of the outer edge of the annular adaptor. The retaining member(s) may extend along part of a circular path around the annular hub. There may be two or more separate retaining lips. The mounting bracket preferably includes a fastener, for example to maintain engagement between the retaining member(s) and the annular adaptor. The mounting element may include an opening in the hub, which is adapted to receive a bolt for fastening the annular adaptor to the annular hub.

The annular hub preferably comprises a central, generally circular aperture, though which light enters the photographic light-modifying apparatus, in use. The annular hub may be adapted to releasably engage the axially extending support arm. The support arm is preferably adapted to be moved between different rotation positions with respect to the annular hub, such that a light source mounted to the support arm is positionable in different rotational orientations relative to the photographic light-modifying apparatus. The support arm may be adapted to releasably engage an inner edge of the annular hub. The support arm may connect slidably to the annular hub. The support arm may be arranged to change radial position with respect to the annular hub, but substantially retain an axially extending orientation.

The support arm and annular hub preferably include formations that provide a releasable engagement between these components, for example by means of a releasable locking mechanism, which may be resiliently biased into a locked configuration. Where the support arm is adapted to be moved between different rotational positions with respect to the annular hub, the mounting bracket preferably defines two or more pre-determined configurations, whereby the support arm is adapted to be releasably locked in one of those configurations for use. Typically, rotational configurations across a 90° range would be sufficient, for example at 0°, 45° and 90°.

The support arm may include a pair of jaws defining a channel, within which the inner edge of the annular hub can be received. The annular hub may be provided with a rail. The rail may project axially and may have the same curvature as the inner edge of the annular hub. The rail is advantageous as it may be adapted to co-operate with the support arm in order to prevent disconnection of the support from the annular hub. A guide formation is preferably provided within the jaws of the support arm, which is adapted to co-operate with the rail in this way. The guide formation is preferably adapted to engage a radially outer surface of the rail.

Preferably, a surface of the hub is provided with a retaining groove adapted to receive a formation on the support arm. The formation is preferably a flange. In use, the groove is adapted to retain the flange in close proximity to the hub in order to impede disconnection of the support arm from the hub. The flange may depend downwardly from one of the jaws.

The inner edge of the hub preferably comprises a locating formation which is adapted to co-operate with a corresponding locating formation on the support arm. Preferably, the locating formation on the hub is a locating depression and the locating formation on the support is a locating projection.

The locating projection may be mounted on a movable portion of the support. Preferably the movable portion is a user-actuable switch. The switch may be movable against a spring bias. The locating depression may be defined by two, angularly spaced, oppositely orientated ramps, the ramps being located on a generally radially inwardly facing surface of the inner edge of the aperture. This arrangement is advantageous as, in use, the action of sliding the support relative to the hub with the inner edge of the aperture located between the jaws causes the locating projection to travel up one of the ramps. If the support is slid further, the spring bias causes the projection to enter the gap between the ramps. The support is prevented from further sliding by abutment of the projection with the high walls of the ramps. This configuration provides a stable rotational position.

Actuating the switch may withdraw the projection from the depression and so continued sliding is possible. There are preferably three locating depressions as defined above on the inner edge of the aperture, resulting in three stable rotational positions for the support. This arrangement therefore has the advantage that, in use, the photographic diffusion apparatus may be stably mounted relative to a light source in a number of predetermined orientations.

A guide wall may be provided on the inner edge of the annular hub. The guide wall may be adapted to engage the jaws on the support arm. The guide wall may advantageously locate the locating projection radially, such that the projection is able to enter and exit the locating depression.

The support arm preferably includes a mount for a portable lighting source that is moveable relative to the remainder of the support arm, and the annular hub. Preferably, the support arm comprises an elongate portion, which is adapted to slidably receive the moveable mount. The moveable mount preferably includes a fastener, such as a simple threaded bolt, which enables the mount to be secured in position, in use. In addition, the support arm may include one or more mounts for other accessories, such as an umbrella reflector/diffuser, which may also be moveably mounted.

The annular hub may have mounting channels to allow the photographic light-modifying apparatus to be mounted to the annular hub. The channels are preferably radially outwardly open. In one embodiment, each mounting channel is defined by a central projection, and side projections to each side that are set back from the central projection, thereby defining a channel therebetween. Where the photographic light-modifying apparatus comprises one or more panels, and the panels have a frame, the frame of each panel may be engaged with the mounting channels. The resilience of the frame may be sufficient to retain the apparatus, in use, or alternatively fasteners may be provided to further secure the apparatus to the annular hub.

The annular hub may also include further mounts for other accessories, such as LED light sources for modelling.

Preferred embodiments will now be described with reference to the accompanying drawings, which are for illustration only, and in which
Figure 1 is a perspective view from above of a first embodiment of the enclosure according to the invention;
Figure 2 is a front view of a panel for use in the enclosure of Figure 1;
Figures 3(a) and (b) are underside views of the enclosure of Figure 1 when the enclosure is in a contracted and expanded configuration respectively;
Figure 4(a) is a perspective view of a second embodiment of the enclosure according to the invention;
Figure 4(b) is an underside view of the enclosure of Figure 4(a);
Figure 5 is a perspective view of a bracket according to the invention;
Figure 6 is a perspective view from above of a frame that forms part of the bracket of Figure 5;
Figure 7 is a perspective view from below of the frame of Figure 6;
Figure 8 is an exploded perspective view of a support arm that forms part of the bracket of Figure 5, including the locking switch;
Figures 9(a) and (b) are perspective views of the support arm of Figure 8, from above and below, respectively;
Figures 10(a) and (b) are perspective views of a locking switch for use with the support arm of the bracket, from above and below, respectively;
Figures 11(a) and (b) are perspective views a riser and an umbrella mount respectively.

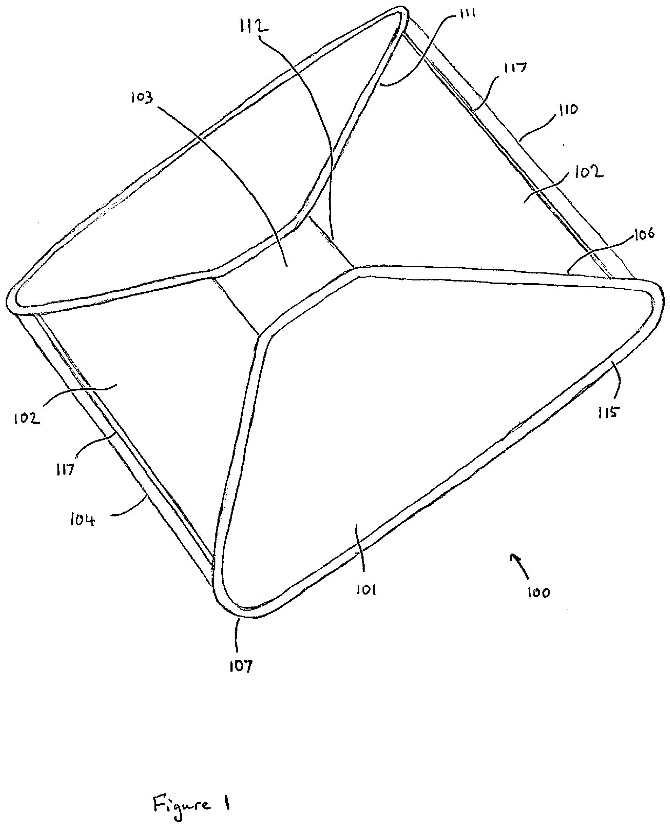

According to a first aspect of the invention there is disclosed an enclosure 100, see Figure 1. Figure 1 shows an enclosure 100 comprising two generally triangular panels 101 which, together with two webs 102, form a generally pyramidal enclosure 100 with a generally square aperture 103 at the apex. The base 104 of the enclosure is open and is generally square in shape.

Each panel 101 is flat and generally has the form of an isosceles triangle, having a base 105 and two sides 106 which are inclined relative to the base 105. The base of the triangle is longer than the two inclined sides. The two corners of the panel 107 adjacent the base 105 are rounded in form. The base 105 is longer than the other two inclined sides 106 and is slightly outwardly curved in the plane of the panel. The sides 106 are generally straight. The corner 108 opposite the base is truncated, so as to define a short, generally straight portion extending generally parallel to the base 105. The short, generally straight portion connects to each of the inclined edges via a bend 109.

The two webs 102 are identical, each generally having the form of a triangle, the triangle having a base 110 and two sides 111 which are inclined relative to the base. The height of each web 102 is slightly less than the height of each panel 101. The base 110 is slightly outwardly curved in the plane of the web 102. The corner 112 of the triangle opposite the base 110 is truncated, so as to define a short, generally straight portion extending generally parallel to the base. Each web 102 is connected along its inclined edge 111 to an adjacent panel 101. The inclined edge 111 of the web is sewn to the panel along a line on the panel close to, and extending parallel to, the panel edge 106. In this way the webs and panels form a generally pyramidal enclosure 100. This configuration will be referred to as the expanded configuration. The truncated upper corners of the webs and panels lie in substantially the same plane and together define a generally square aperture 103 in the top of the enclosure 100. The lower edges of the webs and panels together define a larger, generally square aperture at the base 104 of the enclosure. As the height of each web 102 is slightly less than the height of each panel 101, the base 105 of each panel extends beyond the base 110 of each web.

Each panel 101 comprises a sheet 113 of substantially inelastic fabric, most preferably a woven synthetic fabric, eg nylon. A fabric tube 114 is sewn to, and extends along, the periphery of the sheet 113. The two ends of the tube 114 are sewn together so that the tube is continuous. A band of carbon spring steel 115 extends within the tube so as to define a support frame for the sheet 113. The band of carbon spring steel 115 has a width of about 10mm, and the ends are riveted together to form the support frame. The effect of the support frame is to maintain the sheet of fabric in tension. Each web 102 comprises a sheet of substantially inelastic fabric, eg nylon. Unlike the panels, the webs are not provided with a support frame.

The sheet 113 and tube 114 are opaque. A silver-coloured reflective material 116 is bonded to the interior surface of the webs 102 and panels 101 such that it covers the majority of the interior of the enclosure 100.

In the expanded configuration, two support struts 117 are provided which extend between the panels 101, substantially along the lower edge of each web 102. An end of each strut 117 abuts a panel close to a lower corner 107 of the panel (ie a corner adjacent the base 105 of the panel 101). The other end of the strut 117 similarly abuts a lower corner 107 of another panel 101. The struts 117 prevent the enclosure 100 from collapsing in use. The ends of the struts 117 are received within locating recesses, in order to maintain their position during use.

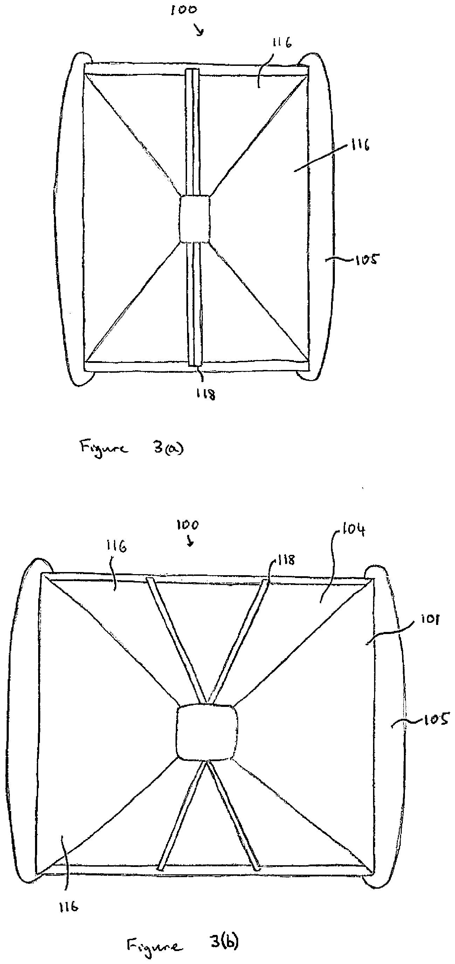

Two zip-fasteners 118 are provided on the inner surface of the enclosure. This is best seen in Figures 3(a) and 3(b). The zip-fasteners are conventional zip-fasteners, ie having a puller and two tapes. The tapes have two long edges, referred to here as a mounting edge and an operative edge. A continuous row of teeth is disposed along the operative edge. Each tape is connected, along its mounting edge to the inner surface of the web 102. The tapes are orientated such that the row of teeth on one tape faces the row of teeth on the other tape. The tapes each extend between the truncated, top corner 112 of the web, and the base 110. When the zip 118 is unfastened, ie when the majority of the teeth on each tape are not connected to the teeth on the other tape, the tapes define a V-shape having its apex close to the top corner 112 of the web (see Figure 3(b)). When the zip 118 is fastened, ie when a user pulls the puller of the zip 118 in the direction in which the tapes extend, such that the majority of the teeth on each tape are connected to the teeth on the other tape, the tapes lie close together and extend in the same direction (see Figure 3(a)). This causes the shape of the enclosure 100 to change.

In the contracted configuration, as shown in Figure 3(a), the region of the inner surface of the web 102 located between the tapes no longer forms part of the inner surface of the enclosure 100. Instead, the inner surface of the enclosure comprises only the regions located between the tapes and the edges of the inner surface of the web 102, the zip fasteners 118 and the inner surface of the panels 101. In the contracted configuration, the shape of the lower opening 104 of the enclosure is generally rectangular, rather than generally square.

In the contracted configuration, short struts are provided which connect the lower corners 107 of the panels 101 in order to prevent collapse of the enclosure 100, as described in relation to the expanded configuration.

In the expanded configuration, the enclosure can be mounted to a self-supporting light source, such as a studio flash mounted on a lighting rig. Studio flashes and other lighting units may be provided with a generally annular retaining groove which is open in a radially outward direction. The upper corners of the panels which define the generally square aperture 103 of the enclosure 100 can be inserted into the retaining groove. This provides a secure connection between the enclosure 100 and the lighting unit. When the enclosure is no longer required, it can be detached from the lighting unit and the struts can be removed from their locating recesses in the panels. The enclosure can be brought into the contracted configuration by fastening the zips. The enclosure can then be remounted to the lighting unit as described above. If the user wishes to store the enclosure, the flexible webs permit the panels to be brought together such that the enclosure becomes generally flat, and so occupies relatively little space when stored.

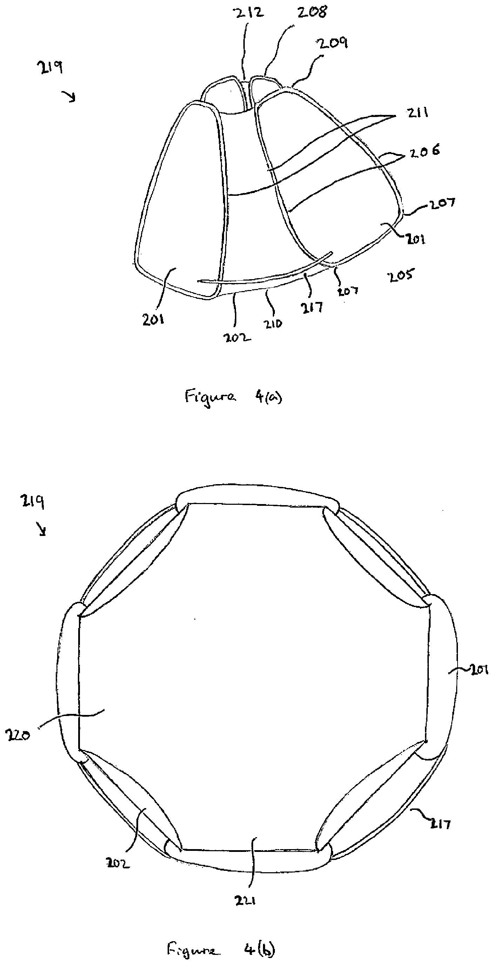

In an alternative embodiment, an enclosure 219 comprises four panels 201, the panels being connected together by webs 202, to form a generally pyramidal enclosure having eight sides and a base 220. The base 220 is generally octagonal in shape, see Figures 4(a) and 4(b).

Each panel 201 generally has the form of a triangle, having a base 205 and two sides 206 which are inclined relative to the base 205. The base of the triangle is shorter than the two inclined sides. The two corners 207 adjacent the base are rounded in form. Each of the three edges of the panel are outwardly curved in the plane of the panel 201. The corner 208 opposite the base is truncated, so as to define a short, generally straight portion. The short, generally straight portion connects to each of the inclined edges 206 via a bend 209.

The four webs 202 each generally have the form of a triangle, the triangle having a base 210 and two sides 211 which are inclined relative to the base 210. The upper corner 212 of each web 202 is truncated. The height of each web 202 is slightly less than the height of each panel 201. The inclined edges 211 are curved inwardly in the plane of the web 202. Each web 202 is connected along its inclined edge 211 to an inner surface of an adjacent panel 201. The inclined edge 211 of the web connects to the panel 201 along a line on the panel close to, and extending parallel to, the panel edge. In this way, the webs and panels form an eight-sided pyramidal enclosure 219.

The truncated upper corners 208,212 of the webs 202 and panels 201 lie in substantially the same plane and together define an aperture in the top of the enclosure 219. The lower edges of the webs and panels together define a larger, generally octagonal aperture 220 at the base of the enclosure 119. A diffusion screen 221 is provided in the lower region of the enclosure 119. The screen 221 comprises a sheet of translucent fabric, the edges of which are connected to lower portions of the inner surfaces of the webs and panels defining the enclosure 219. In this way, the screen covers the generally octagonal lower aperture of the enclosure 219.

As in the previous embodiment, support struts 217 are provided which extend between adjacent panels 201, substantially along the lower edge of the web 202. An end of each strut 217 abuts a panel close to a lower corner 207 of the panel. The ends of the struts 217 are received within locating recesses, in order to maintain their position during use.

The materials used in the enclosure of this embodiment are the same as the materials used in relation to the first embodiment. As in the first embodiment, a silver-coloured reflective material is bonded to the interior surface of the webs and panels, covering the majority of the interior of the enclosure 219. The connection between the webs and the panels is obtained by sewing.

The enclosure of this alternative embodiment can be mounted to a lighting unit in a similar way to the previous embodiment.

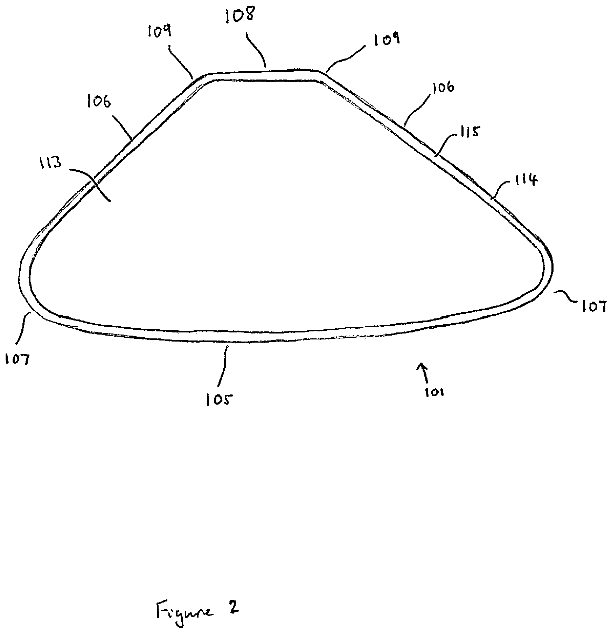

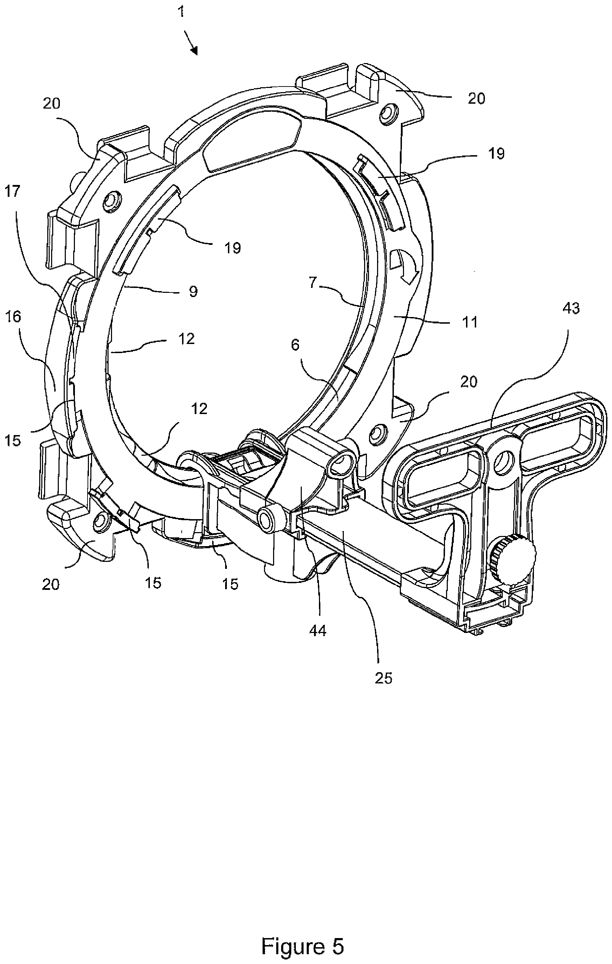

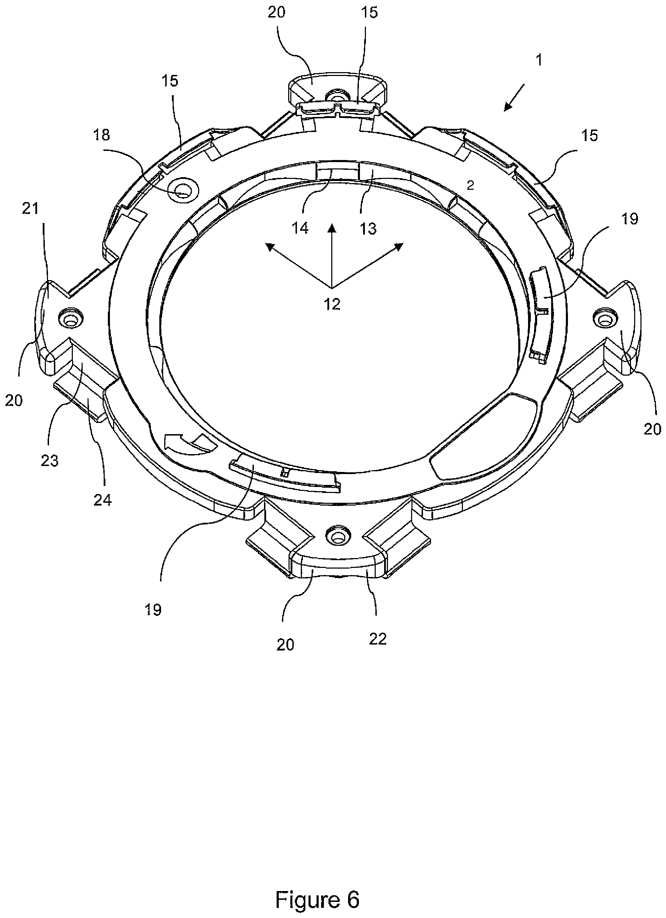

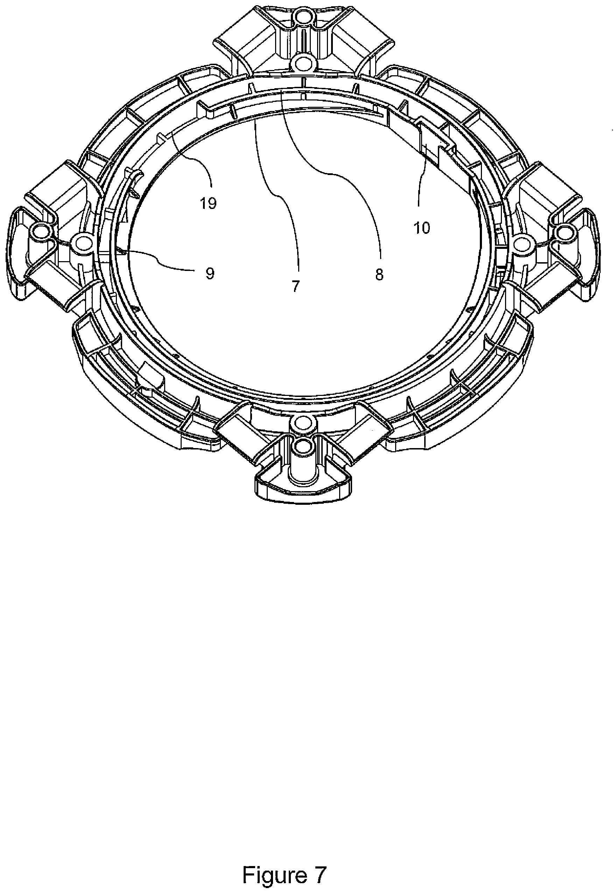

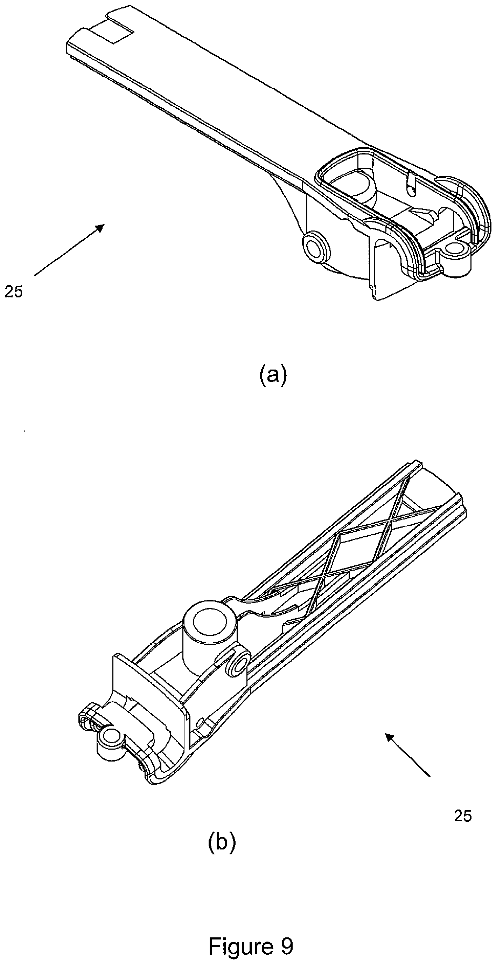

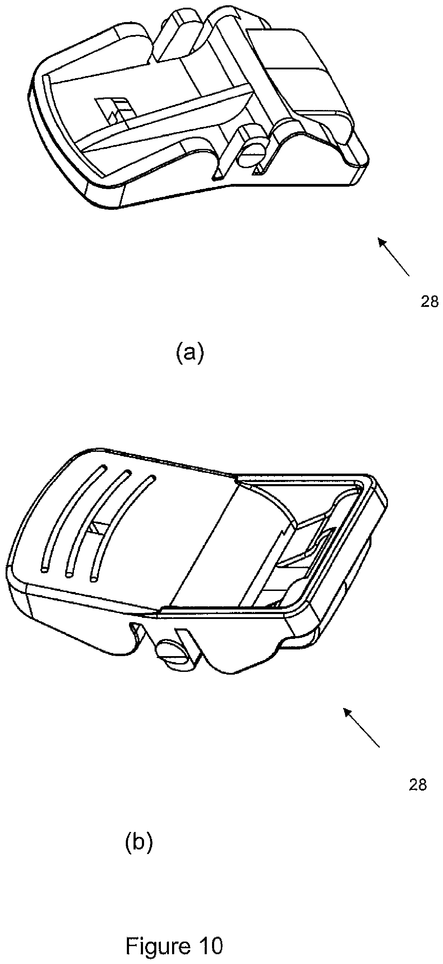

In a further aspect of the invention, a bracket for mounting illumination devices is provided, and a preferred embodiment of this aspect of the invention is shown in Figures 5-11. The bracket is adapted for connection to a softbox, such as those described above with reference to Figures 1-4.

The bracket comprises a frame 1, a support arm 25, a riser 43 and an umbrella mount 44. The frame 1 is generally annular in shape. In other words, the frame 1 is generally circular with a central opening. The frame 1 comprises a generally annular plate 2. The plate has front and rear surfaces. The radially inner edge of the plate 2 is provided with an annular flange 6 (this will be referred to as the inner flange 6) which extends a short distance rearwardly. A guide wall 7 is provided along the radially inner surface of the inner flange 6. The guide wall 7 lies in a plane parallel to the plane of the annular plate 2 and extends radially inwardly from the inner flange 6. The guide wall 7 extends almost the full circumference of the inner flange. There is provided a short section of the inner flange upon which the guide wall 7 is not provided.

The inner flange 6 extends a short distance rearwardly beyond the guide wall 7. This portion of the inner flange 6 will be referred to as the mounting rail 8. The mounting rail 8 is approximately annular, although a short angular section is absent on the right side of the frame. Several bracing members 9, each having the shape of a right-angled triangle, are provided in spaced relation in order to support the guide wall 7. Each bracing member 9 extends from the inner surface of the rail 8 to the rear surface of the guide wall 7.

A recess 10 is defined in the uppermost portion of the mounting rail. The recess is adapted to hold an LED panel.

A further annular flange 11 is provided on the base of the plate. This will be referred to as the outer flange 11. This has a slightly larger circumference than the mounting rail 8.

The frame 1 is provided with three locating elements 12. These locating elements 12 each comprise two oppositely-inclined ramps 13. Each ramp 13 extends along both the front surface of the guide wall 7 and the radially inner surface of the inner flange 6. The ends of the widest portions of the ramps 13 face each other and are spaced apart. In this way the ramps 13 create a locating depression 14. The three locating elements 12 are spaced at 45 degree intervals along the inner flange 6. In particular, one is provided on the lowermost surface of the inner flange 6, another is provided on the left side of the flange 6, and the other intermediate those elements 12.

The front surface of the annular plate 2 is provided, at its radially outer edge, with three retaining channels 15. Each channel corresponds to a particular locating element 12 and is positioned so as to lie along the same radius as that locating element 12. The channels 15 are therefore positioned at the bottom of the plate 2, on the left side of the plate 2 and at the angular mid-point between the two. Each channel 15 is defined by a spacing flange 16 which extends a short distance forwardly from the edge of the frame 2, and by a retaining wall 17, which extends a short distance radially inwardly from the forwardmost edge of the spacing flange 16. A cylindrical aperture 18 for receiving a bolt is provided in the plate at the mid-point between the lowermost locating element 12 and its corresponding retaining channel 15.

It may be desired to mount a studio flash to the frame. This requires connecting a studio plate (not shown) to the frame 2. This is a circular plate with a central aperture to which the studio flash can be mounted. To this end, the front surface of the annular plate 2 is provided with two plate-retaining channels 19. These channels 19 are again defined by a spacing flange and a short, radially-inwardly extending retaining wall, and have a similar configuration to the retaining channels 15 described above. The plate-retaining channels 19 are positioned close to the inner edge of the annular plate 2. They are located at the mid-point between the top and left, and the top and right, sides of the plate 2, respectively. If a user wishes to connect a studio flash to the annular frame 2, a circular studio plate (not shown) can be mounted on the frame 2, such that the outer edge of the studio flash is received within the plate-retaining channels 19. The studio plate is secured by inserting a bolt into the cylindrical aperture 18.

The top left, top right, bottom left and bottom right outer edges of the plate 2 are provided with mounting projections 20. These comprise a flat portion 21 lying in the plane of the plate and having the shape of a truncated quarter-circle. A short, axially-extending flange 22 extends rearwardly from the periphery of each flat portion 21. On either side of each mounting projection 20 the plate is provided with a longer axially rearwardly extending flange 23, the rearmost edge of which is provided with a radially outwardly extending mounting wall 24. When mounting the frame 1 to a softbox, the edges of the softbox walls which define a mounting aperture are received between mounting projections 20 and mounting walls 24 so that the frame is secured to the softbox. The mounting projections 20 are provided with through holes 18 so that accessories can be attached.

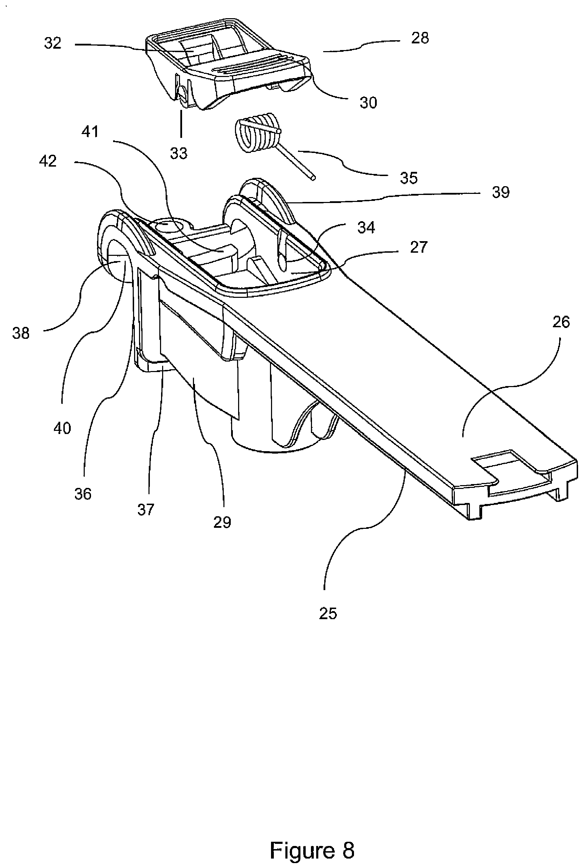

As best shown in Fig 8, a support arm 25 is provided. A distal end of the support arm 25 can be slidably connected to the frame 1. The support arm 25 comprises an elongate bar 26 having an aperture 27 close to the distal end. The aperture 27 is adapted to receive a locking switch 28 such that the locking switch 28 is pivotably mounted within the aperture. Below the aperture 27 is a housing 29 for the locking switch. The locking switch 28 has a proximal portion (the pressable portion 30) which is adapted to be pressed by a user, and a distal portion (the operative portion 31), which includes a locking projection 32. The locking projection 32 depends downwardly from the underside of the operative portion 31. The left and right sides of the switch have a mounting lug 33 adapted to be received in a depression 34 on the inner surface of the housing, so as to allow pivotable movement of the switch 28 relative to the support arm 25. A coil spring 35 is provided within the housing.

The housing is provided at its distal end with a retaining wall 36, such that the lower edge 37 of the retaining wall depends downwardly to a slightly greater extent than the housing 29. This lower edge of the retaining wall therefore defines a downwardly depending lip 27 extending transversely across the distal end of the support arm 25.

The distal end of the support arm 25 is provided with a guide wall 38. The guide wall 38 faces the retaining wall 36 and is longitudinally spaced therefrom. The guide wall 38 is connected to the remainder of the support arm by a pair of connecting arms 39. This arrangement therefore defines a downwardly open channel 40 which is able to receive the inner edge of the frame 1. A guide ridge 41 extends transversely across the surface of the guide wall 38.

In the rest condition, the spring 35 pushes upwardly on the pressable portion 30 such that the operative portion 31 is tilted downwardly. In this condition, the locking projection 32 extends into the channel 40. Pressing downwardly on the pressable portion 30 causes the switch 28 to pivot. This takes place against the action of the spring. This pivoting action causes the locking projection 32 to move upwardly. If the user releases the pressable portion 30, the locking projection 32 returns to its original position.

The distal end of the support arm 25 is also provided with a mounting recess 42 which acts as a shoe mount for mounting lighting devices.

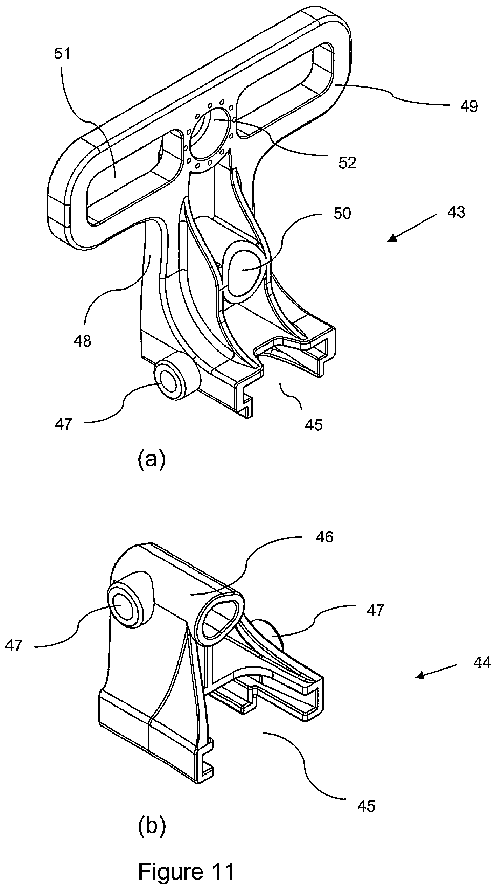

The proximal end of the support arm 25 is adapted to receive an umbrella mount 44 and a riser 43. These items can be secured to any desired position on the support arm 25. The umbrella mount 44, as shown in Figure 11(b), has a guide channel 45 for receiving the support arm 25. A longitudinally extending tube 46 for receiving an umbrella is mounted above the guide channel 45, separated by two support struts. Openings 47 are provided in the guide channel 45, and the tube 46, for receiving screws to secure the umbrella mount 44 and umbrella respectively.

The riser 43, as shown in Figure 11(a), has a guide channel 45 for receiving the support arm 25. An opening 47 is provided in the guide channel 45 for receiving a screw to secure the riser to the support arm 25. The riser 43 has a vertical support portion 48 which supports a horizontally extending lighting mount 49. The vertical portion 48 comprises an aperture 50 to which a spigot can be connected for mounting a lighting device. The lighting mount contains two generally oblong apertures 51, either side of a central circular aperture 52. Cold shoe mounting blocks or other supports for lighting devices can be secured to the lighting mount using these apertures.

A user connects the support arm 25 to the frame 1 by placing the distal end of the support arm 25 against the guide wall 7 of the frame 1, so that the guide wall 7 is received within the channel 40 defined in the distal end of the support arm 25. This should be done on the right hand side of the frame, ie in the region in which the mounting rail 8 is absent. The support arm 25 is then slid in a clockwise direction along the guide wall 7. When the support arm 25 reaches the start of the mounting rail 8 the mounting rail enters the channel 40 and passes over a radially inward facing surface of the guide ridge 41. When the support arm 25 reaches the locating element 12, the locking projection 32 of the locking switch 28 engages the first ramp 13 of the locating element 12. At the same time the downwardly depending lip 37 on the retaining wall 36 of the support arm 25 enters the retaining channel 15 located on the lower area of the front surface of the plate 2. If the user continues to slide the support arm 25 clockwise the ramp 13 forces the locking projection 32 upwards against the action of the coil spring 35. The support arm is prevented from radial inward movement by the engagement of the mounting rail 8 with the guide ridge 41.

Once the locking projection 32 passes the ramp 13, the action of the spring 35 causes the locking projection 32 to enter the locating depression 14. In this configuration, further sliding is prevented by abutment of the sides of the locking projection 32 on the ends of the ramps 13. In this configuration, therefore, the support arm 25 is stably connected to the frame 1. The guide ridge 41 being beneath the mounting rail 8 assists in providing stability. The lip 37 of the retaining wall 36 being within the retaining channel 15 also assists in providing stability. However, if the user pushes down on the pressable portion 30 of the switch 28, the switch pivots and the locking projection 32 is withdrawn from the locating depression 14 and further sliding is possible. In this way, the support arm 25 can be stably located in any of the three locating elements 12. This means that, if lighting devices are attached to the support arm, eg via the riser 43, three possible orientations of those lighting devices relative to the softbox are possible.

## Claims

1. A photographic lighting apparatus comprising a plurality of panels (101, 201), each panel being separated from adjacent panels on each side by flexible webs such that the panels and webs define a wall of an enclosure, each panel having a greater rigidity than the webs (102, 202), and a removable strut (117, 217) associated with each web for maintaining the panels in mutually fixed relation, the enclosure having an opening (103) at a proximal end adapted to be mounted to a light source with proximal edges of at least some of the panels being weight-bearing members for the apparatus, and a distal end of the enclosure being adapted to transmit light therefrom, **characterised in that** the apparatus comprises means for reconfiguring the enclosure, to bring the enclosure from an expanded configuration to a contracted configuration by reducing in size the surface of one or more of the webs, such that the distal end of the apparatus is reduced in size.

2. A photographic lighting apparatus as claimed in Claim 1, wherein the panels and webs define a wall that extends from the opening adapted to be mounted to a light source at the proximal end of the apparatus, to the distal end of the apparatus adapted to transmit light therefrom.

3. A photographic lighting apparatus as claimed in any of Claims 1 or 2, wherein the means for reconfiguring the enclosure is located on the inner surface of the enclosure.

4. A photographic lighting apparatus as claimed in any of the preceding Claims, wherein the means for reconfiguring the enclosure comprises a fastener having two elongate strips which are connectable together.

5. A photographic lighting apparatus as claimed in Claim 4, wherein when the enclosure is in the expanded configuration, the fastener is open and the strips define a V-shape.

6. A photographic lighting apparatus as claimed in any of the preceding Claims, wherein the means for reconfiguring the enclosure is a zip fastener.

7. A photographic lighting apparatus as claimed in any of the preceding Claims, wherein the panel is generally triangular or trapezoidal in shape, with parallel proximal and distal edges of differing lengths.

8. A photographic lighting apparatus as claimed in Claim 7, wherein the side edges of the panel are of substantially equal lengths.

9. A photographic lighting apparatus as claimed in Claim 1, comprising four panels connected together by the webs.

10. A photographic lighting apparatus as claimed in Claim 9, wherein the proximal opening is octagonal in cross-section.

## Patentansprüche

1. Fotografische Beleuchtungsvorrichtung, umfassend eine Vielzahl von Wandelementen (101, 201), wobei jedes Wandelement von benachbarten Wandelementen auf jeder Seite durch flexible Bahnen getrennt ist, sodass die Wandelemente und Bahnen eine Wand eines Gehäuses bilden, wobei jedes Wandelement eine größere Steifigkeit als die Bahnen (102, 202) aufweist, und eine entfernbare Strebe (117, 217), die jeder Bahn zum Halten der Wandelemente in gegenseitig fixierter Beziehung zugeordnet ist, wobei das Gehäuse an einem proximalen Ende eine Öffnung (103) aufweist, die zum Befestigen an einer Lichtquelle eingerichtet ist, wobei proximale Ränder zumindest einiger der Wandelemente lasttragende Elemente für die Vorrichtung sind, und ein distales Ende des Gehäuses zum Übertragen von Licht daraus eingerichtet ist, **dadurch gekennzeichnet, dass** die Vorrichtung eine Einrichtung zum Umkonfigurieren des Gehäuses aufweist, um das Gehäuse durch Verkleinern der Fläche von einer oder mehrerer der Bahnen aus einer erweiterten Konfiguration in eine kontrahierte Konfiguration zu bringen, sodass sich das distale Ende der Vorrichtung verkleinert.

2. Fotografische Beleuchtungsvorrichtung nach Anspruch 1, wobei die Wandelemente und Bahnen eine Wand bilden, die sich von der Öffnung, die zur Befestigung an einer Lichtquelle am proximalen Ende der Vorrichtung eingerichtet ist, bis zum distalen Ende der Vorrichtung, die zum Übertragen von Licht daraus eingerichtet ist, erstreckt.

3. Fotografische Beleuchtungsvorrichtung nach einem der Ansprüche 1 oder 2, wobei die Einrichtung zum Umkonfigurieren des Gehäuses an der Innenfläche des Gehäuses angeordnet ist.

4. Fotografische Beleuchtungsvorrichtung nach einem der vorhergehenden Ansprüche, wobei die Einrichtung zum Umkonfigurieren des Gehäuses ein Befestigungselement mit zwei länglichen Streifen umfasst, die miteinander verbindbar sind.

5. Fotografische Beleuchtungsvorrichtung nach Anspruch 4, wobei, wenn sich das Gehäuse in der erweiterten Konfiguration befindet, das Befestigungselement geöffnet ist und die Streifen eine V-Form bilden.

6. Fotografische Beleuchtungsvorrichtung nach einem der vorhergehenden Ansprüche, wobei die Einrichtung zum Umkonfigurieren des Gehäuses ein Reißverschluss ist.

7. Fotografische Beleuchtungsvorrichtung nach einem der vorhergehenden Ansprüche, wobei das Wandelement im Allgemeinen dreieckig oder trapezförmig mit parallelen proximalen und distalen Rändern unterschiedlicher Länge ausgebildet ist.

8. Fotografische Beleuchtungsvorrichtung nach Anspruch 7, wobei die Seitenränder des Wandelements im Wesentlichen gleich lang sind.

9. Fotografische Beleuchtungsvorrichtung nach Anspruch 1, umfassend vier Wandelemente, die durch die Bahnen miteinander verbunden sind.

10. Fotografische Beleuchtungsvorrichtung nach Anspruch 9, wobei die proximale Öffnung im Querschnitt achteckig ist.

## Revendications

1. Appareil d'éclairage photographique comprenant une pluralité de panneaux (101, 201), chaque panneau étant séparé de panneaux adjacents de chaque côté par des bandes flexibles de telle sorte que les panneaux et bandes définissent une paroi d'une enceinte, chaque panneau ayant une rigidité supérieure aux bandes (102, 202), et une entretoise amovible (117, 217) associée à chaque bande pour maintenir les panneaux dans une relation mutuellement fixée, l'enceinte ayant une ouverture (103) au niveau d'une extrémité proximale adaptée à être montée sur une source de lumière, des bords proximaux d'au moins certains des panneaux étant des éléments porteurs pour l'appareil, et une extrémité distale de l'enceinte étant adaptée à transmettre de la lumière à partir de celle-ci, **caractérisé en ce que** l'appareil comprend des moyens pour reconfigurer l'enceinte, afin d'amener l'enceinte d'une configuration déployée à une configuration contractée en réduisant en dimension la surface d'une ou plusieurs des bandes, de sorte que l'extrémité distale de l'appareil soit réduite en dimension.

2. Appareil d'éclairage photographique selon la revendication 1, dans lequel les panneaux et bandes définissent une paroi qui s'étend à partir de l'ouverture adaptée à être montée sur une source de lumière au niveau de l'extrémité proximale de l'appareil, jusqu'à l'extrémité distale de l'appareil adaptée à transmettre de la lumière à partir de celle-ci.

3. Appareil d'éclairage photographique selon l'une quelconque des revendications 1 ou 2, dans lequel les moyens pour reconfigurer l'enceinte sont situés sur la surface interne de l'enceinte.

4. Appareil d'éclairage photographique selon l'une quelconque des revendications précédentes, dans lequel les moyens pour reconfigurer l'enceinte comprennent un élément d'attache ayant deux bandes allongées qui peuvent être reliées l'une à l'autre.

5. Appareil d'éclairage photographique selon la revendication 4, dans lequel lorsque l'enceinte est dans la configuration déployée, l'élément d'attache est ouvert et les bandes définissent une forme en V.

6. Appareil d'éclairage photographique selon l'une quelconque des revendications précédentes, dans lequel les moyens pour reconfigurer l'enceinte sont une fermeture à glissière.

7. Appareil d'éclairage photographique selon l'une quelconque des revendications précédentes, dans lequel le panneau est de forme généralement triangulaire ou trapézoïdale, avec des bords proximaux et distaux parallèles de longueurs différentes.

8. Appareil d'éclairage photographique selon la revendication 7, dans lequel les bords latéraux du panneau sont de longueurs sensiblement égales.

9. Appareil d'éclairage photographique selon la revendication 1, comprenant quatre panneaux reliés les uns aux autres par les bandes.

10. Appareil d'éclairage photographique selon la revendication 9, dans lequel l'ouverture proximale est octogonale en section transversale.
